# EUROPÄISCHE PATENTANMELDUNG

(11) **EP 0 665 094 A1**
(43) Veröffentlichungstag der Anmeldung: **02.08.1995**
(21) Anmeldenummer: 94120892.8
(22) Anmeldetag: 29.12.1994
(51) Int. Cl.: B29C 47/34

(54) **Verfahren zur Herstellung von Rohren**

(30) Priorität: 01.02.1994 DE 4402910
(71) Anmelder: REHAU AG + Co, 95111 Rehau (DE)
(72) Erfinder: Zwilling, Hermann, D-95111 Rehau (DE); Seewald, Günther, D-95111 Rehau (DE)

(57) **Zusammenfassung**

Die Erfindung betrifft ein Verfahren zur Herstellung von Rohren aus polymeren Werkstoffen. Die Rohre weisen abschnittsweise ringförmige Verdickungen auf, wobei diese Verdickungen durch Stauchen des Rohrwandquerschnittes in noch verformbarem Zustand während des Abzugsvorgangs erzeugt werden.

Die Erfindung wird darin gesehen, daß das Stauchen durch ein kurzzeitiges, ruckartiges Verschieben der Abzugseinheit entgegen der Extrusionsrichtung erfolgt. Mit dieser Verschiebung wird erreicht, daß am Ende des kurzen Hubweges der Abzugseinheit die Rohrgeschwindigkeit gegen Null gerichtet ist. Am Ende des Hubweges wird die Abzugseinheit mit der über den ganzen Arbeitsvorgang gleich gebliebenen Abzugsgeschwindigkeit in einer ruckartigen Gegenverschiebung wieder in die Ausgangsposition zurückgestellt.

## Beschreibung

Die Erfindung betrifft ein Verfahren zur Herstellung von Rohren aus polymeren Werkstoffen mit abschnittsweisen, ringförmigen Verdickungen, wobei die Verdickungen durch Stauchen des Rohrwandquerschnittes in noch verformbarem Zustand während des Abzugsvorgangs erzeugt werden.

Ein solches Verfahren ist in der Deutschen Patentschrift 1 209 282 beschrieben. Dort wird durch eine Steuerungseinrichtung in zeitlichen Abständen die Abzugsgeschwindigkeit der Abzugseinrichtung um einen bestimmten Prozentsatz, beispielsweise um 20% verringert. Da bei diesem Verfahren die Menge des aus dem Extruder austretenden Kunststoffes gleich bleibt, entsteht während des Betriebs der Anlage mit verringerter Abzugsgeschwindigkeit durch Zusammenstauchen des noch plastischen Rohres unmittelbar hinter der Austrittsöffnung des Extruders ein Rohrstück mit entsprechend vergrößerter Wanddicke. Wenn nach Ende des Steuerungsvorganges die Abzugsvorrichtung wieder mit normaler Geschwindigkeit zu laufen beginnt, so schließt sich an das Rohrstück mit erhöhter Wanddicke wieder ein Rohr normaler Wanddicke an. Auf diese Weise lassen sich mit dem Verfahren nach dem Stand der Technik gezielte Querschnittsverdickungen in der Rohrwand dort herstellen, wo anschließend beispielsweise eine Verbindungsmuffe ausgeformt werden soll. Da bei diesem Ausformvorgang der Rohrwandquerschnitt durch die Lumenvergrößerung verringert wird, wird das hierzu erforderliche Rohrwandmaterial aus der Querschnittsverdickung genommen mit dem Erfolg, daß nach dem endgültigen Ausformen der Verbindungsmuffe der Rohrwandquerschnitt im Muffenbereich weitgehend der normalen Wanddicke des Rohres entspricht.

Mit diesem bekannten Verfahren lassen sich auf einem längeren Hubweg Rohrwandverdickungen herstellen, die in definierten Abständen voneinander in der Rohrwand ausgeformt sind und von entsprechenden Abschnitten normaler Rohrwanddicke unterbrochen sind. Die dazu erforderliche Änderung der Rohrgeschwindigkeit läßt sich nur über die Regelung der Abzugsgeschwindigkeit steuern.

Nahe beieinanderliegend ringförmige Rohrverdickungen lassen sich mit diesem Verfahren nicht erzielen.

Aus der Deutschen Patentschrift 2 739 682 ist weiterhin eine Vorrichtung bekannt, mittels derer außenliegende Ringverdickungen an extrudierte Rohre angeformt werden können. Dazu wird ein mitlaufendes Werkzeug aus zwei Halbschalen verwendet, welches nach dem Austreten des Rohrstreifens aus der Düsenöffnung über dem Rohrstrang geschlossen wird. An die ringförmigen Kavitäten der Werkzeug-Halbschalen wird dann ein Vakuum angelegt, über das der noch weiche Kunststoff der Rohrwandung in die Kavitäten eingezogen wird. Nach dem Abschluß dieses Ausformvorgangs werden die Werkzeug-Halbschalen geöffnet und über den Vorschubweg zurück zum Düsenmund geführt. Das Werkzeug ist danach zur Erzeugung eines weiteren Außenrings an der Rohroberfläche gerüstet.

Auch mit diesem Verfahren müssen weite Hubwege des Arbeitswerkzeuges zurückgelegt werden, weil insbesondere das Vakuum den Rohrwandquerschnitt nach dem Aufsetzen der Werkzeug-Halbschalen relativ langsam nach außen in die Werkzeugkavitäten einziehen kann.

Hier setzt die Erfindung ein, die es sich zur Aufgabe gestellt hat, innenliegende, ringförmige Rohrwandverdickungen ohne Beeinflussung des äußeren Rohrumfangs in relativ schneller Abfolge auszuformen. Erfindungsgemäß wird dazu vorgeschlagen, daß das Stauchen durch ein kurzzeitiges, ruckartiges Verschieben der Abzugseinheit entgegen der Extrusionsrichtung erfolgt, daß am Ende des kurzen Hubweges die Rohrgeschwindigkeit gegen Null gerichtet ist, und daß die Abzugseinheit mit der über den ganzen Arbeitsvorgang gleich gebliebenen Abzugsgeschwindigkeit in einer ruckartigen Gegenverschiebung wieder in die Ausgangsposition zurückgestellt wird.

Die Erfindung arbeitet mit einer ruck- bzw. stoßartigen Änderung der Relativgeschwindigkeit des Rohres, wobei die Abzugsgeschwindigkeit des Rohrabzugs konstant gehalten wird.

Zur Durchführung des erfindungsgemäßen Verfahrens wird die gesamte Abzugseinheit über einen kurzen Weg ruckartig entgegen der Extrusionsrichtung verschoben und wieder zurückgeführt. Damit wird für Sekundenbruchteile eine Rohrgeschwindigkeit gegen Null Meter/Sec. erreicht und die Rohrwand wird dadurch abschnittsweise in Ringwellungen aufgestaucht. Hierbei wird ein Rohrabzug nach dem Stand der Technik auf ein über Pneumatik- oder Hydraulikzylinder verschiebbares Untergestell gesetzt. Der Zylinder wird dabei so gesteuert, daß er in wählbaren Zeitintervallen den gesamten Abzug gegen die Laufrichtung des Rohres und wieder zurückbewegt. Dabei bleibt die Laufgeschwindigkeit der Abzugsraupen konstant. Der Bewegungsweg des Abzuges ist dabei über den Hub einstellbar oder über Anschläge regelbar.

Die dadurch erzeugte ruckartige kurze Relativbewegung bewirkt eine Aufstauchung der Rohrwand im Bereich der Kalibrierung in Form einer ringförmigen Wellung oder Rippung am inneren Umfang des Rohres. Wesentlich hierbei ist, daß diese Aufstauchbewegung erfolgt, solange der äußere Umfang des Rohres in der Kalibrierung gehalten ist. Auf diese Weise kann die Stauchkraft nur nach innen zum Rohrlumen hin wirken und der äußere Umfang des Rohres bleibt glatt und unbeeinflußt.

Durch den erfindungsgemäßen Arbeitsvorgang werden in definiertem Abstand voneinanderliegende Ringrippen am inneren Rohrumfang erzeugt, deren Höhe und deren Abstand voneinander durch Beeinflussung des Hubweges des Arbeitsvorgangs variierbar ist. Hierbei bleibt die Geschwindigkeit der Abzugsraupen V₁ konstant, während die Differenzgeschwindigkeit V_{diff} über den Kolbenhub der Zusatzeinrichtung individuell einstellbar ist. Auf diese Weise lassen sich die Abstände b um die Höhe a der inneren Ringrippen über den Kolbenhub und die Kolbengeschwindigkeit einstellen.

In einem Beispielsfall war bei einer Taktdauer von jeweils 0,5 Sec. und einer Verschiebezeit von ca. 0,1 Sec. der gewählte Hubweg 16 mm.

Der gewählte Begriff "Hubweg" bezeichnet hier den Verfahrweg der Abzugseinheit gegen die Extrusionsrichtung.

Mit dieser Gegenbewegung wurden im Beispielsfall innenliegende Ringrippen von 0,4 mm Höhe in einem Abstand von 200 mm bei einer Rohrgeschwindigkeit V von 5,7 m pro Min. erzeugt.

Beim erfindungsgemäßen Verfahren kann die Taktdauer von 0,5 Sec. und der Hubweg von 16 mm beliebig erhöht oder verringert werden, um kürzere oder längere Abstände der innenliegenden Ringrippen untereinander und verschieden hohe Ringrippen zu erzeugen.

Die innenliegenden Ringrippen schließen umlaufende Rohrwandbereiche ein, die ihrerseits als Luftpolster beim Einzug von beispielsweise Kabeln in solcherart ausgestatteten Rohre bewirken. Dadurch kann der Einzugs- bzw. Einschubwiderstand der Kabel an den Rohrwandungen verringert werden. Es lassen sich dadurch größere Längen von Kabeln in solche Rohre einziehen, bevor die Einzugskraft auf den Kabelquerschnitt negativ zu wirken beginnt.

## Patentansprüche

1. Verfahren zur Herstellung von Rohren aus polymeren Werkstoffen mit abschnittsweisen, ringförmigen Verdickungen, wobei die Verdickungen durch Stauchen des Rohrwandquerschnittes in noch verformbarem Zustand während des Abzugsvorgangs erzeugt werden, dadurch gekennzeichnet, daß das Stauchen durch ein kurzzeitiges, ruckartiges Verschieben der Abzugseinheit entgegen der Extrusionsrichtung erfolgt, daß am Ende des kurzen Hubweges die Rohrgeschwindigkeit gegen Null gerichtet ist, und daß die Abzugseinheit mit der über den ganzen Arbeitsvorgang gleich gebliebenen Abzugsgeschwindigkeit in einer ruckartigen Gegenverschiebung wieder in die Ausgangsposition zurückgestellt wird.

2. Verfahren nach Anspruch 1, dadurch gekennzeichnet, daß durch den Arbeitsvorgang in definiertem Abstand voneinander liegende Ringrippen am inneren Rohrumfang erzeugt werden, deren Höhe und deren Abstand voneinander durch Beeinflussung der Taktdauer und des Hubweges des Arbeitsvorgangs variierbar ist.
